# EUROPÄISCHE PATENTSCHRIFT

(11) **EP 2 735 782 B1**
(45) Veröffentlichungstag und Bekanntmachung des Hinweises auf die Patenterteilung: **18.07.2018**
(21) Anmeldenummer: 12193905.2
(22) Anmeldetag: 22.11.2012
(51) Int. Cl.: F16L 41/00, G01L 19/14

(54) **Schnellkupplung mit integriertem Sensor**
Quick coupling with integral sensor
Accouplement rapide avec capteur incorporé

(43) Veröffentlichungstag der Anmeldung: 28.05.2014
(73) Patentinhaber: TI Automotive (Fuldabrück) GmbH, 34277 Fuldabrück (DE)
(72) Erfinder: Jensen, Hans, 73265 Dettingen unter Teck (DE)
(74) Vertreter: Rohmann, Michael

(56) Entgegenhaltungen:
- EP-A1- 2 505 900
- WO-A1-2010/015912
- DE-A1-102008 043 323
- DE-U1-202006 016 186
- JP-A- 11 118 648

## Beschreibung

Die Erfindung betrifft eine Kupplung zur Verbindung von zumindest zwei Anschlusselementen für ein fluides Medium, beispielsweise Rohrkupplung, zur Verbindung von zwei Rohrleitungen für ein fluides Medium.

Kupplungen der vorstehend genannten Art sind aus der Praxis bekannt und haben sich grundsätzlich bewährt. Weiterhin ist es bekannt, Kupplungen mit zusätzlichen Einrichtungen auszustatten, um Informationen über das durch den Kupplungskörper strömende fluide Medium zu erhalten. So ist es beispielsweise bekannt, in die Wandung des Kupplungskörpers Temperatursensoren einzuarbeiten, durch die die Temperatur des in dem Kupplungskörper strömenden fluiden Mediums erfasst werden kann. Aus der EP 2 505 900 A1 ist eine Rohrkupplung zur Verbindung von zwei Rohrleitungen für ein fluides Medium bekannt. Diese Rohrkupplung weist einen Kupplungskörper und eine auf den Kupplungskörper aufgesetzte Sensorkammer auf, die einen eine Profilierung aufweisenden Schaft aufweist, welche Profilierung als Labyrinthdichtung fungiert und die Sensorkammer gegen den Kupplungskörper abdichtet. Nachteilig bei den aus der Praxis bekannten Kupplungen ist der hohe Aufwand, der zu deren Herstellung zu erbringen ist. Weiterhin ist es erstrebenswert, die Funktionssicherheit der aus der Praxis bekannten Kupplungen zu verbessern.

Der Erfindung liegt das technische Problem zugrunde eine Kupplung der eingangs genannten Art anzugeben, die sich durch eine hohe Funktionssicherheit auszeichnet, die einfach herstellbar ist und mit der Eigenschaften des durch den Kupplungskörper strömenden fluiden Mediums ermittelbar sind. Weiterhin liegt der Erfindung das technische Problem zugrunde, eine Schnellkupplungsanordnung zur Lösung der vorstehend beschriebenen Probleme anzugeben.

Zur Lösung des technischen Problems lehrt die Erfindung nach Anspruch 1 eine Kupplung zur Verbindung von zumindest zwei Anschlusselementen für ein fluides Medium, beispielsweise Rohrkupplung zur Verbindung von zwei Rohrleitungen für ein fluides Medium, mit einem Kupplungskörper, wobei der Kupplungskörper ein erstes Anschlussende für den Anschluss eines ersten Anschlusselements und ein zweites Anschlussende für den Anschluss eines zweiten Anschlusselements aufweist, wobei ein Durchströmungskanal zwischen dem ersten Anschlussende des Kupplungskörpers und dem zweiten Anschlussende des Kupplungskörpers in dem Kupplungskörper ausgebildet ist, wobei der Kupplungskörper eine von dem Durchströmungskanal durch eine Trennwand getrennte Sensorkammer aufweist, wobei in der Sensorkammer ein Sensor angeordnet ist, wobei an dem Sensor ein Sensorabschnitt angeschlossen ist, welcher Sensorabschnitt sich ausgehend von dem Sensor derart durch die Trennwand erstreckt, dass ein durchströmungskanalseitiges Ende (freies Ende) des Sensorabschnitts in Kontakt mit dem Durchströmungskanal steht und wobei der Kupplungskörper dichtungsfrei an dem Sensorabschnitt anliegt. Dass das freie Ende des Sensorabschnitts in Kontakt mit dem Durchströmungskanal steht, meint insbesondere, dass in dem Durchströmungskanal fließendes fluides Medium den Sensorabschnitt anströmt. Die Kupplung kann in einem Kraftfahrzeug bzw. einer Brennkraftmaschine eingesetzt werden. Zweckmäßigerweise ist die Kupplung ein Bestandteil eines Kraftstoffleitungssystems und/oder Bremsleitungssystems und/oder Harnstoffleitungssystem. Ein Anschlusselement kann ein Rohr, eine Schlauchleitung, ein Tank oder dergleichen sein. Das fluide Medium ist eine aus der Gruppe "Kraftstoff, Bremsflüssigkeit, Harnstofflösung" ausgewählte Flüssigkeit. Es liegt im Rahmen der Erfindung, dass ein Anschlussende eine Kupplungsstelle für ein Anschlusselement ist. Beispielsweise ist das Anschlussende eine Aufnahme für ein Rohrende (Einsteckteil) oder ein Schlauchanschluss. Gemäß einer Ausführungsform ist ein Anschlussende eine Verbindungsstelle zwischen der Kupplungskörper und einem Tank.

Zweckmäßigerweise weist der Kupplungskörper an dem ersten Anschlussende eine Eingangsöffnung und an dem zweiten Anschlussende eine Austrittsöffnung auf. Der Durchströmungskanal ist besonders bevorzugt als Durchgangsbohrung ausgebildet, welcher Durchströmungskanal sich vorteilhafterweise von der Eingangsöffnung zu der Austrittsöffnung erstreckt. Es liegt im Rahmen der Erfindung, dass die Durchgangsbohrung einen kreisrunden Querschnitt aufweist. Der Durchströmungskanal weist ausgehend von der Eingangsöffnung einen Rückhalteabschnitt auf, an welchen Rückhalteabschnitt zweckmäßigerweise austrittsöffnungsseitig ein Dichtungsabschnitt anschließt. Ein Durchmesser des Dichtungsabschnitts ist zweckmäßigerweise kleiner als ein Durchmesser des Rückhalteabschnitts. Es ist möglich, dass in dem Dichtungsabschnitt zumindest ein Dichtungselement angeordnet ist. Empfohlenermaßen wird das Dichtungselement von zwei O-Ringdichtungen gebildet, wobei in einer bevorzugten Ausführungsform zwischen den O-Ringdichtungen ein als Ring ausgebildetes Zwischenelement positioniert ist. Die Sensorkammer ist irreversibel an den Kupplungskörper angeformt. Es ist möglich, dass in der Sensorkammer zumindest zwei Sensoren bzw. eine Mehrzahl bzw. Vielzahl an Sensoren angeordnet ist. Vorzugsweise weist die Sensorkammer einen rechteckigen Querschnitt auf und kann quaderförmig ausgebildet sein. Besonders bevorzugt ist die Trennwand ein Abschnitt des Kupplungskörpers, welcher Abschnitt ein Teil der Sensorkammer ist und einen Abschnitt einer Durchströmungskanalwandung bildet. Der Sensorabschnitt durchgreift besonders bevorzugt die Trennwand und erstreckt sich gemäß einer Ausführungsform in den Durchströmungskanal bzw. in die Durchgangsbohrung. Zweckmäßigerweise wird die Durchströmungskanalwandung von einer Wandung des Kupplungskörpers bestimmt. Gemäß einer bevorzugten Ausführungsform durchgreift der Sensorabschnitt die Trennwand bzw. die Wandung des Kupplungskörpers, so dass sich der Sensorabschnitt ausgehend von der Wandung des Kupplungskörpers vorzugsweise in radialer Richtung in Bezug auf den Durchströmungskanal in den Durchströmungskanal hinein erstreckt. Empfohlenermaßen ragt der Sensorabschnitt in vorzugsweise radialer Richtung in den Durchströmungskanal hinein. Gemäß einer weiteren Ausführungsform durchgreift der Sensorabschnitt die Trennwand und ist mit der Maßgabe in der Wandung des Kupplungskörpers positioniert, dass der Sensorabschnitt in Kontakt mit dem durch den Durchströmungskanal förderbaren fluiden Medium bringbar ist und das durchströmungskanalseitige Ende des Sensorabschnitts in einer Ebene mit der Wandung des Kupplungskörpers liegt. Mit anderen Worten, steht gemäß der weiteren Ausführungsform der Sensorabschnitt nicht über die Wandung des Kupplungskörpers über bzw. schließt der Sensorabschnitt bündig mit einer durchströmungskanalseitigen Oberfläche der Wandung ab.

Vorzugsweise ist der Sensorabschnitt als bevorzugt zylindrische Hülse ausgebildet, welche Hülse sich ausgehend von dem Sensor durch die Trennwand in Richtung des Durchströmungskanals und vorzugsweise in den Durchströmungskanal des Kupplungskörpers erstreckt. Ein durchströmungskanalseitiges Ende der Hülse ist bevorzugt innerhalb des Durchströmungskanals angeordnet. Es ist möglich, dass das durchströmungskanalseitige Ende der Hülse einen Abschnitt der durchströmungskanalseitigen Oberfläche der Wandung des Kupplungskörpers bildet und bevorzugt nicht in den Durchströmungskanal hineinragt. Die Hülse ist bevorzugt aus einem unbiegbaren bzw. im Wesentlichen unbiegbaren Material gefertigt. Es empfiehlt sich, dass die Hülse vollständig bzw. im Wesentlichen vollständig aus Glas besteht. Es ist möglich, dass die Hülse aus einem Metall, beispielsweise aus Stahl gefertigt ist.

Zweckmäßigerweise weist der Sensorabschnitt eine Kapillare auf, welche Kapillare sich ausgehend von dem durchgangskanalseitigen Ende (freien Ende) des Sensorabschnitts zu dem Sensor erstreckt. Durch die Kapillare wird vorteilhafterweise eine fluidleitende Verbindung zwischen dem Sensor und dem Durchströmungskanal angegeben. Besonders bevorzugt ist die Kapillare zentriert in dem vorzugsweise als Zylinder ausgebildeten Sensorabschnitt angeordnet. Empfohlenermaßen weist der Sensorabschnitt einen kreisrunden oder ovalen Querschnitt aus. Es ist möglich, dass der Sensorabschnitt jeden beliebigen Querschnitt, beispielsweise rechteckig oder polygonal, aufweist. Bevorzugt erstreckt sich die Kapillare entlang der Längsachse des Sensorabschnitts. Der Durchmesser der Kapillare ist im Rahmen der Erfindung wesentlich kleiner als der Durchmesser des vorzugsweise als Kreiszylinder ausgebildeten Sensorabschnitts bzw. der vorzugsweise als Kreiszylinder ausgebildeten Hülse.

Vorteilhafterweise ist die Sensorkammer als massiver Körper ausgebildet. Massiver Körper meint insbesondere, dass die Sensorkammer hohlraumfrei ausgebildet ist. Der Sensor ist vorzugsweise formschlüssig und/oder kraftschlüssig in der Sensorkammer aufgenommen. Auf diese Weise wird eine Sensorkammer angegeben, die sich durch eine hohe Funktionssicherheit und mechanische Beständigkeit auszeichnet. Es liegt im Rahmen der Erfindung, dass an den Sensor eine Leiterplatine angeschlossen ist, welche Leiterplatine beispielsweise die von dem Sensor erfassten Messsignale verarbeitet. Gemäß einer Ausführungsform ist an den Kupplungskörper vorzugsweise einstückig ein Kontaktabschnitt angeformt, welcher Kontaktabschnitt zweckmäßigerweise elektrische Kopplungselemente aufweist, mit denen die von dem Sensor erfassten und/oder von der Leiterplatine bearbeiteten Messdaten aus dem Kupplungskörper auslesbar sind. Bevorzugt ist die Leiterplatine formschlüssig und/oder kraftschlüssig in der Messkammer aufgenommen.

Besonders bevorzugt ist der Kupplungskörper einstückig ausgebildet. Erfindungsgemäß ist die Sensorkammer einstückig mit dem Kupplungskörper ausgebildet. Die Sensorkammer ist besonders bevorzugt schweißverbindungsfrei an den Kupplungskörper angeschlossen. Grundsätzlich ist es möglich, dass an den Kupplungskörper zumindest zwei Sensorkammern und beispielsweise eine Mehrzahl bzw. Vielzahl an Sensorkammern angeordnet ist. Zweckmäßigerweise ist in jeder Sensorkammer jeweils ein Sensor angeordnet. Beispielsweise ist in einer ersten Sensorkammer ein Drucksensor und in einer zweiten Sensorkammer ein Temperatursensor angeordnet.

Besonders bevorzugt ist der Kupplungskörper durch Umspritzen eines von dem Sensor, dem Sensorabschnitt und/oder der Leiterplatine gebildeten Sensoraggregats bzw. Sensoraggregaten erzeugt. Gemäß einer Ausführungsform werden zur Ausbildung des Kupplungskörpers zumindest zwei Sensoraggregate umgespritzt. Zweckmäßigerweise wird das Sensoraggregat bzw. die Sensoraggregate zur Ausbildung des Kupplungskörpers mit einem bevorzugt thermoplastischen Kunststoff umgespritzt. Der Kupplungskörper liegt bevorzugt fluiddicht an dem Sensorabschnitt an. Auf diese Weise ist eine dichtungsfreie Ausbildung der Verbindung zwischen dem Kupplungskörper und dem Sensor und/oder Sensorabschnitt möglich. Gemäß der Erfindung liegt der Kupplungskörper unmittelbar an dem Sensor bzw. jedem Sensor und dem Sensorabschnitt bzw. jedem Sensorabschnitt an. Besonders bevorzugt liegt der Kupplungskörper unmittelbar an der Hülse des Sensors an. Das bedeutet, dass zwischen dem Kupplungskörper und dem Sensorabschnitt bzw. der Hülse keine weiteren Bauteile angeordnet sind.

Gemäß einer Ausführungsform ist der Kupplungskörper aus dem Kunststoff gefertigt. Beispielsweise besteht der Kupplungskörper zumindest teilweise und bevorzugt vollständig bzw. im Wesentlichen vollständig aus einem elektrisch leitfähigen Kunststoff (ESD-Kunststoff). Vorzugsweise besteht der Kupplungskörper im Wesentlichen aus einem vorzugsweise elektrisch leitfähigen thermoplastischen Kunststoff. Grundsätzlich ist es möglich, dass der Kupplungskörper im Wesentlichen aus einem Duroplasten besteht. Der thermoplastische Kunststoff umfasst beispielsweise zumindest eine aus der Gruppe "Polyamid, Polyphtalamid" ausgewählte Komponente.

Weiterhin lehrt die Erfindung zur Lösung des technischen Problems eine Schnellkupplungsanordnung mit einer Kupplung nach Anspruch 1, mit einem Einsteckteil und einem Rückhalter, wobei das Einsteckteil in eine an dem ersten Anschlussende angeordnete Eingangsöffnung des Durchgangskanals in den Kupplungskörper einführbar ist und wobei das Einsteckteil mit dem Rückhalter in dem Kupplungskörper festsetzbar ist. Es ist möglich, dass die Schnellkupplungsanordnung neben der Kupplung bzw. neben dem Kupplungskörper einen zweiten Kupplungskörper aufweist. Mit anderen Worten verfügt die Schnellkupplungsanordnung über einen Verbinderkörper, welcher Verbinderkörper von dem Kupplungskörper und dem zweiten Kupplungskörper gebildet ist, wobei der zweite Kupplungskörper vorzugsweise fluiddicht an den Kupplungskörper angeschlossen ist. Es empfiehlt sich, dass der zweite Kupplungskörper ein weiteres Anschlusselement aufweist, an welches weitere Anschlusselement beispielsweise ein Rohr, eine Schlauchleitung, ein Tank oder dergleichen anschließbar ist. Das Einsteckteil ist vorzugsweise ein hohles und bevorzugt starres Rohr mit einer Stirnseite. Zweckmäßigerweise beinhaltet das Einsteckteil eine in radialer Richtung vergrößerte, beispielsweise ringförmige Stauchung (Wulst), welche Stauchung beabstandet zu der Stirnseite des Einsteckteils ausgebildet ist. Zwischen der Stirnseite des Einsteckteils und der Stauchung ist im Rahmen der Erfindung eine zylindrische Dichtfläche ausgebildet. Im montierten Zustand der Schnellkupplungsanordnung ist das Einsteckteil mit der Maßgabe in den Durchströmungskanal eingeführt, dass die zylindrische Dichtfläche in dem Dichtungsabschnitt des Kupplungskörpers angeordnet ist und fluiddicht an dem Dichtungselement anliegt.

Zweckmäßigerweise wird durch eine fluiddichte Anlage der zylindrischen Dichtfläche an dem Dichtungselement und durch eine fluiddichte Anlage des Dichtungselements an dem Kupplungskörper eine fluiddichte Verbindung zwischen dem Einsteckteil und dem Kupplungskörper angegeben. Gemäß einer Ausführungsform ist im montierten Zustand der Schnellkupplungsanordnung in dem Rückhalteabschnitt der Durchgangsbohrung der Rückhalter angeordnet, welcher Rückhalter das Einsteckteil in dem Kupplungskörper festsetzt. Besonders bevorzugt liegt im montierten Zustand eine rückhalterseitige Anlagefläche an einer eintrittsöffnungsseitigen Stirnfläche der Stauchung des Einsteckteils an. Der Rückhalter ist besonders bevorzugt als separates bzw. von dem Kupplungskörper verschiedenes Bauteil ausgebildet. Es ist möglich, dass der Rückhalter ein Hufeisenrückhalter ist bzw. ein U-Profil aufweist. Gemäß einer weiteren Ausführungsform ist der Rückhalter als Ring ausgebildet, welcher Ring den Kupplungskörper zumindest teilweise und/oder das Einsteckteil vollständig umgibt. Besonders bevorzugt ist der Rückhalter im montierten Zustand im Rückhalteabschnitt des Kupplungskörpers angeordnet.

Der Erfindung liegt die Erkenntnis zugrunde, dass sich die erfindungsgemäße Kupplung bzw. die erfindungsgemäße Schnellkupplungsanordnung durch einen überraschend einfachen Aufbau und hohe Funktionssicherheit auszeichnet. Wesentlich bei der erfindungsgemäßen Kupplung ist die dichtungsfreie Anlage des Sensorabschnitts an dem Kupplungskörper, wodurch bei der Herstellung der erfindungsgemäßen Kupplung die Handhabung einer Vielzahl verschiedener Bauteile verhindert wird. Die erfindungsgemäße, vorteilhafte einstückige Ausbildung des Kupplungskörpers und der Sensorkammer sorgt funktionssicher für eine hervorragende Kapselung des Sensors bzw. Sensoraggregats gegenüber der die Kupplung umgebenden Atmosphäre, wodurch Verschmutzungen des Sensoraggregats ebenso ausgeschlossen werden können wie die Kontamination des Sensors durch Kraftstoffe, Harnstofflösungen, Wasser oder andere Flüssigkeiten. Infolgedessen zeichnet sich die erfindungsgemäße Kupplung und die erfindungsgemäße Schnellkupplungsanordnung durch eine hervorragende Haltbarkeit, mechanische Festigkeit und Ausfallsicherheit aus.

Nachfolgend wird die Erfindung anhand einer lediglich ein Ausführungsbeispiel darstellenden Zeichnung genauer erläutert. Es zeigen schematisch:
- Fig. 1: eine Seitenansicht einer erfindungsgemäßen Schnellkupplungsanordnung und
- Fig. 2: eine teilweise aufgebrochene Seitenansicht der Schnellkupplungsanordnung gemäß Fig. 1.

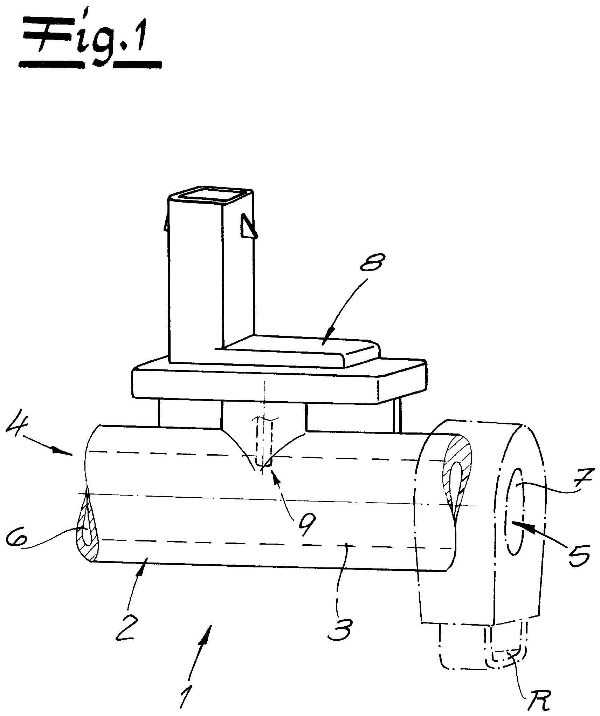

Fig. 1 zeigt eine Schnellkupplungsanordnung 1 zur Verbindung von zwei Anschlusselementen für ein fluides Medium. Die Schnellkupplungsanordnung 1 gemäß den Figuren weist einen Kupplungskörper 2 auf, in welchem Kupplungskörper 2 ein Durchströmungskanal bzw. eine Durchgangsbohrung 3 eingebracht ist. Die Durchgangsbohrung 3 verbindet ein erstes Anschlussende 4 mit einem zweiten Anschlussende 5. An dem ersten Anschlussende 4 weist der Kupplungskörper 2 eine Eingangssöffnung 6 auf, von welcher Eingangsöffnung 6 aus sich die Durchgangsbohrung 3 zu einer an dem zweiten Anschlussende 5 angeordneten Austrittsöffnung 7 erstreckt. Das zweite Anschlussende 5 ist gemäß Fig. 1 als eine Rohraufnahme ausgebildet, in welche Rohraufnahme eine nicht dargestellte Endform eines Rohres mit einem strichpunktiert dargestellten Rückhaltern R festsetzbar ist.

Weiterhin ist in Fig. 1 gezeigt, dass der Kupplungskörper 2 eine Sensorkammer 8 aufweist, welche Sensorkammer 8 gemäß der Erfindung einstückig mit dem Kupplungskörper 2 ausgebildet ist.

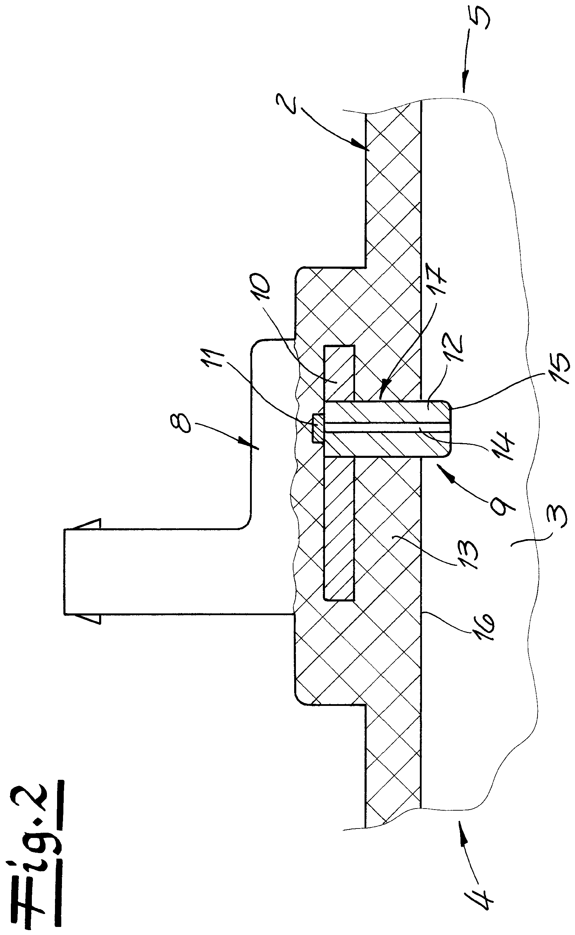

Gemäß Fig. 2 ist in der Sensorkammer 8 ein Sensoraggregat 9 angeordnet, welches Sensoraggregat 9 gemäß Fig. 2 eine Leiterplatine 10, einen als Drucksensor ausgebildeten Sensor 11 und einen als Hülse 12 ausgebildeten Sensorabschnitt aufweist. Gemäß Fig. 2 sind die Leiterplatine 10 und der Sensor 11 formschlüssig in der Sensorkammer 8 aufgenommen. Gemäß dem Ausführungsbeispiel ist die Sensorkammer 8 als massiver Körper ausgebildet, in dem hohlraumfrei die Leiterplatine 10 und der Sensor 11 aufgenommen sind. Ausgehend von dem Sensor 11 erstreckt sich gemäß Fig. 2 die Hülse 12 durch eine Trennwand 13 in Richtung der Durchgangsbohrung 3. In der Hülse 12 ist gemäß dem Ausführungsbeispiel eine Kapillare 14 angeordnet, welche Kapillare 14 eine Fluidleitung zwischen dem Sensor 11 und der Durchgangsbohrung 3 darstellt. Gemäß dem Ausführungsbeispiel ist es möglich, dass in der Durchgangsbohrung 3 strömendes fluides Medium durch die Kapillare 14 in Kontakt mit dem Sensor 11 treten kann. Eine Stirnseite bzw. ein freies Ende 15 der Hülse 12 ragt gemäß dem Ausführungsbeispiel in die Durchgangsbohrung 3. Das bedeutet, dass eine durchgangsbohrungsseitige Stirnseite 15 der Hülse 12 über eine kupplungskörperseitige, die Durchgangsbohrung 3 umgebende Oberfläche 16 übersteht und in die Durchgangsbohrung 3 hineinragt. Die Hülse 12 besteht gemäß dem Ausführungsbeispiel aus Glas.

Der in den Figuren dargestellte Kupplungskörper 2 besteht im Wesentlichen aus einem thermoplastischen Kunststoff. Gemäß dem Ausführungsbeispiel ist der Sensor 11 ein Drucksensor. Weiterhin ist in Fig. 2 erkennbar, dass zwischen der aus dem thermoplastischen Kunststoff bestehenden Wandung 17 des Kupplungskörpers 2 und der aus Glas ausgebildeten Hülse 12 keine Dichtung bzw. keine Dichtungsanordnung angeordnet ist. Gemäß dem Ausführungsbeispiel liegt die Wandung 17 unmittelbar an der Hülse 12 des Sensoraggregats 9 an.

## Patentansprüche

1. Kupplung zur Verbindung von zumindest zwei Anschlusselementen für ein fluides Medium, beispielsweise Rohrkupplung zur Verbindung von zwei Rohrleitungen für ein fluides Medium, mit einem Kupplungskörper (2),
wobei der Kupplungskörper (2) ein erstes Anschlussende (4) für den Anschluss eines ersten Anschlusselements und ein zweites Anschlussende (5) für den Anschluss eines zweiten Anschlusselements aufweist, wobei ein Durchströmungskanal (3) zwischen dem ersten Anschlussende (4) des Kupplungskörpers (2) und dem zweiten Anschlussende (5) des Kupplungskörpers (2) in dem Kupplungskörper (2) ausgebildet ist, wobei der Kupplungskörper (2) eine von dem Durchströmungskanal (3) durch eine Trennwand (13) getrennte Sensorkammer (8) aufweist, wobei in der Sensorkammer (8) ein Sensor (11) angeordnet ist, wobei an dem Sensor (11) ein Sensorabschnitt (12) angeschlossen ist, welcher Sensorabschnitt (12) sich ausgehend von dem Sensor (11) derart durch die Trennwand (13) erstreckt, dass ein durchströmungskanalseitiges Ende des Sensorabschnitts (12) in Kontakt mit dem Durchströmungskanal (3) steht und wobei der Kupplungskörper (2) dichtungsfrei an dem Sensorabschnitt anliegt,
**dadurch gekennzeichnet,**
**dass** die Sensorkammer (8) einstückig mit dem Kupplungskörper (2) ausgebildet ist und
**dass** der Kupplungskörper (2) unmittelbar an dem Sensor (11) und dem Sensorabschnitt (12) anliegt.

2. Kupplung nach Anspruch 1, **dadurch gekennzeichnet, dass** der Sensorabschnitt als vorzugsweise zylindrische Hülse (12) ausgebildet ist, welche Hülse (12) sich ausgehend von dem Sensor (11) durch die Trennwand (13) in den Durchströmungskanal (3) des Kupplungskörpers (2) erstreckt.

3. Kupplung nach einem der Ansprüche 1 oder 2, **dadurch gekennzeichnet, dass** der Sensorabschnitt eine Kapillare (14) aufweist, welche Kapillare (14) sich ausgehend von einem freien Ende (15) des Sensorabschnitts zu dem Sensor (11) erstreckt.

4. Kupplung nach einem der Ansprüche 1 bis 3, **dadurch gekennzeichnet, dass** an dem Kupplungskörper (2) zumindest zwei Sensorkammern (8) angeordnet sind und wobei in jeder Sensorkammer jeweils ein Sensor angeordnet ist.

5. Kupplung nach einem der Ansprüche 1 bis 4, **dadurch gekennzeichnet, dass** die Sensorkammer (8) bzw. jede Sensorkammer (8) als massiver Körper ausgebildet ist.

6. Kupplung nach einem der Ansprüche 1 bis 5, **dadurch gekennzeichnet, dass** der Kupplungskörper (2) durch Umspritzen eines von dem Sensor (11), dem Sensorabschnitt und/oder einer Leiterplatine (10) gebildeten Sensoraggregats (9) bzw. von Sensoraggregaten (9) erzeugt ist.

7. Kupplung nach einem der Ansprüche 1 bis 6, **dadurch gekennzeichnet, dass** der Kupplungskörper (2) unmittelbar an dem Sensor (11) bzw. jedem Sensor (11) und/oder dem Sensorabschnitt bzw. jedem Sensorabschnitt anliegt.

8. Kupplung nach einem der Ansprüche 1 bis 7, **dadurch gekennzeichnet, dass** der Kupplungskörper (2) aus einem Kunststoff gefertigt ist.

9. Kupplung nach einem der Ansprüche 1 bis 8, **dadurch gekennzeichnet, dass** der Kupplungskörper (2) im Wesentlichen aus einem thermoplastischen Kunststoff besteht.

10. Kupplung nach Anspruch 9, **dadurch gekennzeichnet, dass** der thermoplastische Kunststoff zumindest eine aus der Gruppe "Polyamid, Polyphtalamid" ausgewählte Komponente umfasst.

11. Kupplung nach einem der Ansprüche 1 bis 10, **dadurch gekennzeichnet, dass** der Sensor (11) ein Drucksensor ist.

12. Schnellkupplungsanordnung mit einer Kupplung nach einem der Ansprüche 1 bis 11, mit einem Einsteckteil und einem Rückhalter, wobei das Einsteckteil in eine an dem ersten Anschlussende (4) angeordnete Eingangsöffnung (6) des Durchgangskanals (3) in den Kupplungskörper (2) einführbar ist und wobei das Einsteckteil mit dem Rückhalter in dem Kupplungskörper (2) festsetzbar ist.

## Claims

1. A coupling for connecting at least two connection elements for a fluid medium, for example a pipe coupling for connecting two pipes for a fluid medium, with a coupling body (2),
wherein the coupling body (2) has a first connection end (4) for connecting a first connection element and a second connection end (5) for connecting a second connection element, wherein a flow channel (3) between the first connection end (4) of the coupling body (2) and the second connection end (5) of the coupling body (2) is formed in the coupling body (2), wherein the coupling body (2) has a sensor chamber (8) separated from the flow channel (3) by a partition wall (13), wherein a sensor (11) is arranged in the sensor chamber (8), wherein a sensor section (12) is hooked up to the sensor (11), with the sensor section (12) extending through the partition wall (13) proceeding from the sensor (11) in such a way that a flow channel side end of the sensor section (12) is in contact with the flow channel (3), and wherein the coupling body (2) abuts against the sensor section without a seal,
**characterized in**
**that** the sensor chamber (8) is integrally designed with the coupling body (2), and
**that** the coupling body (2) abuts directly against the sensor (11) and the sensor section (12).

2. The coupling according to claim 1, **characterized in that** the sensor section is designed as a preferably cylindrical sleeve (12), wherein the sleeve (12) proceeds from the sensor (11) and extends through the partition wall (13) into the flow channel (3) of the coupling body (2).

3. The coupling according to one of claims 1 or 2,
**characterized in that** the sensor section has a capillary (14), wherein the capillary (14) proceeds from a free end (15) of the sensor section and extends toward the sensor (11).

4. The coupling according to one of claims 1 to 3,
**characterized in that** at least two sensor chambers (8) are arranged on the coupling body (2), and wherein a respective sensor is arranged in each sensor chamber.

5. The coupling according to one of claims 1 to 4,
**characterized in that** the sensor chamber (8) or each sensor chamber (8) is designed as a massive body.

6. The coupling according to one of claims 1 to 5,
**characterized in that** the coupling body (2) is generated by overmolding a sensor unit comprised of the sensor (11), the sensor section and/or a printed circuit board (10), or sensor units (9).

7. The coupling according to one of claims 1 to 6,
**characterized in that** the coupling body (2) abuts directly against the sensor (11) or each sensor (11) and/or the sensor section or each sensor section.

8. The coupling according to one of claims 1 to 7,
**characterized in that** the coupling body (2) is made out of a plastic.

9. The coupling according to one of claims 1 to 8,
**characterized in that** the coupling body (2) essentially consists of a thermoplastic resin.

10. The coupling according to claim 9, **characterized in that** the thermoplastic resin consists of at least one component selected from the group "polyamide, polyphthalamide".

11. The coupling according to one of claims 1 to 10, **characterized in that** the sensor (11) is a pressure sensor.

12. A quick coupling arrangement with a coupling according to one of claims 1 to 11, with an insertion part and a retainer, wherein the insertion part can be introduced into an input opening (6) of the through channel (3) in the coupling body (2) arranged at the first connection end (4), and wherein the insertion part can be fixed in the coupling body (2) with the retainer.

## Revendications

1. Raccord pour relier au moins deux éléments de raccordement pour un milieu fluide, par exemple un raccord de tuyau pour relier deux conduits pour un milieu fluide à un corps de raccord (2),
le corps de raccord (2) comportant une première extrémité de raccordement (4) pour le raccordement d'un premier élément de raccordement et une deuxième extrémité de raccordement (5) pour le raccordement d'un deuxième élément de raccordement, un conduit d'écoulement (3) étant constitué dans le corps de raccord (2) entre la première extrémité de raccordement (4) du corps de raccord (2) et la deuxième extrémité de raccordement (5) du corps de raccord (2), le corps de raccord (2) comportant une chambre de détection (8) séparée du conduit d'écoulement (3) par une paroi de séparation (13), un capteur (11) étant disposé dans la chambre de détection (8), une section de capteur (12) étant raccordée au capteur (11), laquelle section de capteur (12) s'étendant depuis le capteur (11) à travers la paroi de séparation (13) de telle sorte qu'une extrémité du côté du conduit d'écoulement de la section de capteur (12) est en contact avec le conduit d'écoulement (3) et le corps de raccord (2) venant s'appliquer sans joint d'étanchéité à la section de capteur,
**caractérisé**
**en ce que** la chambre de détection (8) est constituée en une seule pièce avec le corps de raccord (2) et
**en ce que** le corps de raccord (2) vient directement s'appliquer au capteur (11) et à la section de capteur (12) .

2. Raccord selon la revendication 1, **caractérisé en ce que** la section de capteur est constituée comme un manchon de préférence cylindrique (12), lequel manchon (12) s'étendant, en partant du capteur (11) à travers la paroi de séparation (13) dans le conduit de passage (3) du corps de raccord (2).

3. Raccord selon l'une quelconque des revendications 1 ou 2, **caractérisé en ce que** la section de capteur comporte un capillaire (14), lequel capillaire (14) s'étend d'une extrémité libre (15) de la section de capteur jusqu'au capteur (11).

4. Raccord selon l'une quelconque des revendications 1 à 3, **caractérisé en ce qu'**au moins deux chambres de détection (8) sont disposées sur le corps de raccord (2) et un capteur étant respectivement disposé dans chaque chambre de détection.

5. Raccord selon l'une quelconque des revendications 1 à 4, **caractérisé en ce que** la chambre de détection (8) ou chaque chambre de détection (8) est constituée comme corps massif.

6. Raccord selon l'une quelconque des revendications 1 à 5, **caractérisé en ce que** le corps de raccord (2) est fabriqué par surmoulage par injection d'un ensemble de capteurs (9) ou d'ensembles de capteurs (9) formé(s) par le capteur (11), la section de capteur et/ou une carte de circuits imprimés (10).

7. Raccord selon l'une quelconque des revendications 1 à 6, **caractérisé en ce que** le corps de raccord (2) vient s'appliquer directement au capteur (11) ou à chaque capteur (11) et/ou à la section de capteur ou à chaque section de capteur.

8. Raccord selon l'une quelconque des revendications 1 à 7, **caractérisé en ce que** le corps de raccord (2) est fabriqué dans une matière plastique.

9. Raccord selon l'une quelconque des revendications 1 à 8, **caractérisé en ce que** le corps de raccord (2) est composé pour l'essentiel d'une matière thermoplastique.

10. Raccord selon la revendication 9, **caractérisé en ce que** la matière thermoplastique comprend au moins un composant sélectionné du groupe "polyamide, polyphtalamide".

11. Raccord selon l'une quelconque des revendications 1 à 10, **caractérisé en ce que** le capteur (11) est un capteur de pression.

12. Système de raccord rapide avec un raccord selon l'une quelconque des revendications 1 à 11, avec une partie emboîtable et un élément de retenue, la partie emboîtable pouvant être introduite dans le corps de raccord (2) dans une ouverture d'entrée (6) du conduit de passage (3) disposée sur la première extrémité de raccordement (4) et la partie emboîtable pouvant être fixée avec l'élément de retenue dans le corps de raccord (2).
